# EUROPEAN PATENT APPLICATION

(11) **EP 2 982 599 A1**
(43) Date of publication of application: **10.02.2016**
(21) Application number: 15177084.9
(22) Date of filing: 16.07.2015
(51) Int. Cl.: B64C 21/10

(54) **DRAG REDUCTION RIBLETS INTEGRATED IN A PAINT LAYER**

(30) Priority: 01.08.2014 US 201414450089
(71) Applicant: The Boeing Company, Chicago, IL 60606-2016 (US)
(72) Inventor: Travis, Matt H., Chicago, IL 60606 (US)
(74) Representative: Witte, Weller & Partner Patentanwälte mbB

(57) **Abstract**

A riblet impression system, comprising an impression mold element (604) having a negative profiled mold of a riblet array; a malleable paint layer (602) adapted to be provided on an aerodynamic surface (111); a gantry (606) supporting the impression mold element and adapted for positioning and motion of the latter over the aerodynamic surface (111); and, a computer control system (608) connected to and controlling the gantry (606) on a predetermined path over the aerodynamic surface (111) and further controlling the gantry vertically with respect to the aerodynamic surface to sequentially impress the negative profiled mold of a riblet array of the impression mold element (604) in the malleable paint layer (602) provided on the aerodynamic surface (111) in order to form a riblet profile along the predetermined path.

## Description

### BACKGROUND INFORMATION

### Field

Embodiments of the disclosure relate generally to the field of surface geometries for aerodynamic improvements to aircraft or surfaces having a flow interface and more particularly to fabrication methods and apparatus for aerodynamic riblets formed in a paint layer.

### Background

Increasing fuel efficiency in modem aircraft is being accomplished through improvement in aerodynamic performance and reduction of structural weight. Recent advances in the use of microstructures such as riblets on aerodynamic surfaces have shown significant promise in reducing drag to assist in reducing fuel usage. Riblets have various forms but advantageous embodiments may be ridge-like structures that minimize drag on the surface of an aircraft.

In certain tested applications, riblets have been pyramidal or inverted V shaped ridges spaced on the aerodynamic surface to extend along the surface in the direction of fluid flow. Riblet structures have typically employed polymeric materials, typically thermoplastic in the form of appliques to create the desired topology. These appliques are bonded to the aircraft paint with adhesives. Polymers are relatively soft however, and may readily deform hundreds of percent with fingernail pressure and may be unrecoverable. Such structures may be undesirable in normal service use on an aircraft or other vehicle for they add weight and potentially dissolve when exposed to solvents. The strength of adhesives to bond the appliques to the vehicle surface may also create issues. Aircraft surfaces are typically required to withstand interactions with various chemicals including Skydrol®, a hydraulic fluid produced by Solutia, Inc.

The practicality of riblets for commercial aircraft use would therefore be significantly enhanced with a riblet structure which is easily applied to aerodynamic surfaces, which does not add weight, is not easily compromised by exposure to the commercial air transport environment, and easily repaired or replaced when damaged.

### SUMMARY

Exemplary embodiments provide a riblet forming system having a print head with an array of print jets. A gantry supports the print head and is positioned and moved over an aerodynamic surface. A computer control system is connected for control of the gantry on a predetermined path over the aerodynamic surface and further connected to the print head to control the print jets to sequentially apply print dots from the array of print jets forming a riblet profile along the predetermined path.

In another embodiment, a riblet impression system incorporates an impression mold element and the gantry supports the impression mold element for positioning and motion over the aerodynamic surface. The computer control system is connected to and controls the gantry on a predetermined path over the aerodynamic surface and further controls the gantry vertically with respect to the aerodynamic surface to sequentially impress the impression mold element in a malleable paint layer on the aerodynamic surface forming a riblet profile along the predetermined path.

In yet another embodiment, a riblet construction system employs a gantry adapted for motion over an aerodynamic surface on a predetermined path with a laser mounted to the gantry. A control system is connected to the gantry to move the gantry on the predetermined path and is connected to the laser to control the laser cutting a riblet topology in a predeposited paint layer.

In a further embodiment, a riblet stereo lithography system includes an agent applicator applying a stereo lithographic agent on an aerodynamic surface. An activator trails the agent applicator on a predetermined path over the aerodynamic surface and activates the agent to create a riblet structure. A spray nozzle trails the activator and flushes away non-activated material leaving the riblet structure in place on the surface.

An embodiment of the invention can involve a riblet forming system that may include a print head having an array of print jets; a gantry supporting the print head and adapted for positioning and motion over an aerodynamic surface; and, a computer control system connected for control of the gantry on a predetermined path over the aerodynamic surface and further connected to the print head controlling the print jets to sequentially apply print dots from the array of print jets forming a riblet profile along the predetermined path. The array of print jets may be two dimensional and said computer control system controls the print jets for application of parallel riblets. The computer control system may control the print jets for application of paint intermediate the riblets for a complete paint layer.

An embodiment of the invention can involve a riblet impression system that may includean impression mold element; a gantry supporting the impression mold element and adapted for positioning and motion over an aerodynamic surface; and, a computer control system connected to and controlling the gantry on a predetermined path over the aerodynamic surface and further controlling the gantry vertically with respect to the aerodynamic surface to sequentially impress the impression mold element in a malleable paint layer on the aerodynamic surface forming a riblet profile along the predetermined path. The impression mold element may include a roller. The riblet impression mold element may include a pressure foot. The riblet impression system may also include a pressure sensor associated with the impression mold element and connected to the computer control system, said computer control system vertically controlling the gantry responsive to the pressure sensor. The riblet impression system may also include a paint application unit carried by the gantry, said impression mold element trailing the paint application unit and sequentially impressing the impression mold element in a malleable paint layer applied by the paint application unit on the aerodynamic surface. The riblet impression system may also include an activator mounted to the gantry following the roller, said activator hardening the formed paint layer including the riblets. The roller may further comprise an acrylate film cured on a master tool having a profile of the riblets said film stripped from the master tool and applied to a roller core. The pressure foot may also include an acrylate film cured on a master tool having a profile of the riblets said film stripped from the master tool and applied to the pressure foot.

An embodiment of the invention can involve a riblet construction system that may include a gantry adapted for motion over an aerodynamic surface on a predetermined path; a laser mounted to the gantry; a control system connected to the gantry, said gantry moving on the predetermined path responsive to the control system, said control system further connected to the laser, said laser cutting a riblet topology in a predeposited paint layer responsive to the control system.

An embodiment of the invention can involve a riblet stereo lithography system that may include an agent applicator applying a stero lithographic agent on an aerodynamic surface; an activator trailing the agent applicator on a predetermined path over the aerodynamic surface, said activator activating the agent to create a riblet structure; and, a spray nozzle trailing the activator and flushing away non-activated material leaving riblet structure in place on the surface. The riblet construction system as defined in claim 13 further comprising a gantry controllable over a predetermined path with respect to an aerodynamic surface, said agent applicator, activator and spray nozzle mounted to the gantry in trailing sequence. The activator may be a laser.

An embodiment of the invention can involve a method for forming riblets on an aerodynamic surface that may include applying a paint layer to an aerodynamic surface; positioning an impression mold element having a negative profile mold of a riblet array prior to drying of the paint layer; lowering the impression mold element is into contact with the paint layer with sufficient pressure to imprint a riblet array in the paint layer; sequentially transitioning the impression mold element over the paint layer on a predetermined path to create a riblet array. The method may also include measuring pressure on the impression mold element to maintain a predetermined pressure. The positioning an impression mold element may include positioning a roller and sequentially transitioning comprises rolling the roller over the paint layer on a predetermined path to create a riblet array. The positioning an impression mold element may include positioning a pressure foot and sequentially transitioning may include raising and moving the pressure foot to sequential positions on a predetermined path and lowered at each position to create the riblet array. The method may also include machining a master tool with a riblet array profile; applying an acrylate film to the master tool creating a negative mold; stripping the acrylate film from the master tool; and, applying the acrylate film to an impression mold element.

The embodiments provide a method for creation of riblets on an aerodynamic surface wherein a paint layer is applied to an aerodynamic surface. An impression mold element having a negative profile mold of a riblet array is positioned prior to drying of the paint layer and lowered into contact with the paint layer with sufficient pressure to imprint a riblet array in the paint layer. The impression mold element is sequentially transitioned over the paint layer on a predetermined path to create a riblet array.

### BRIEF DESCRIPTION OF THE DRAWINGS

The features and advantages of embodiments disclosed herein will be better understood by reference to the following detailed description when considered in connection with the accompanying drawings wherein:
FIG. 1 is an isometric view of a portion of an aerodynamic surface such as a wing or fuselage skin showing exemplary riblets extending in the flow direction;
FIG. 2A is a section view of an array of riblets in a paint layer as described for the embodiments herein;
FIG. 2B is a section view of a generalized case wherein the riblets are separated by an extent of flat surface

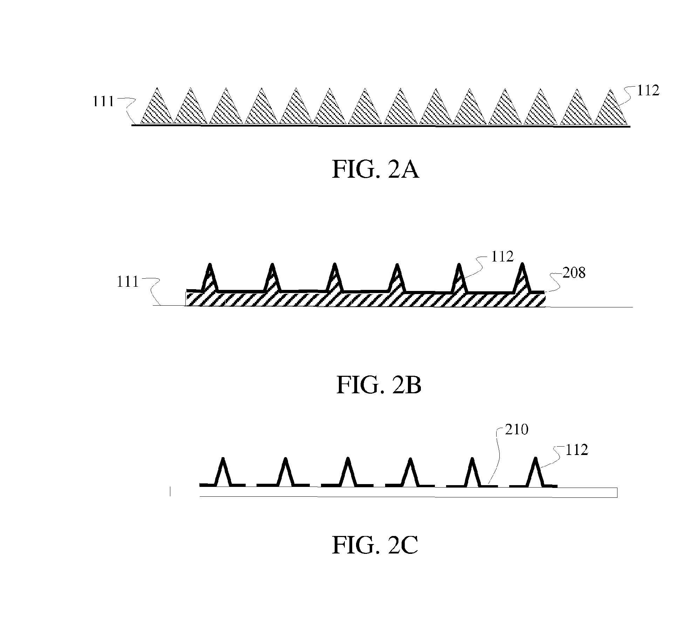

FIG 2B is a section view of an array of riblets created with paint on an aerodynamic surface as described for the embodiments herein;

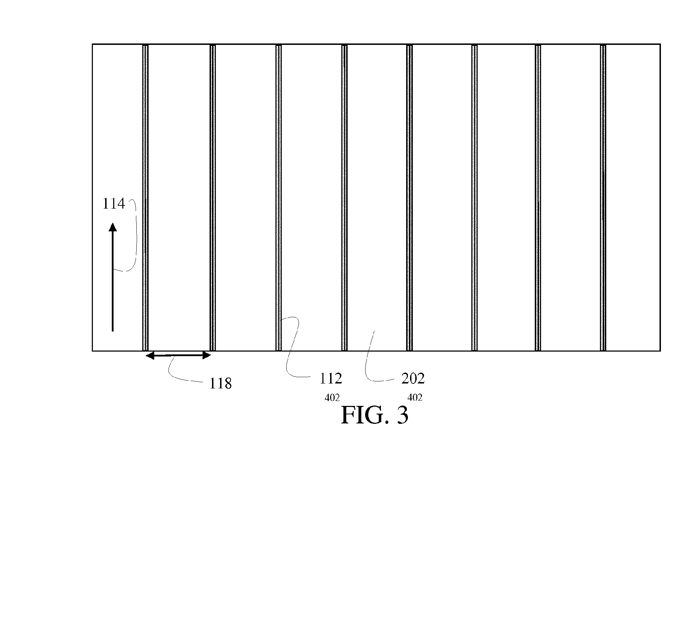

FIG. 3 is a top view of the array of riblets of FIG. 2A;

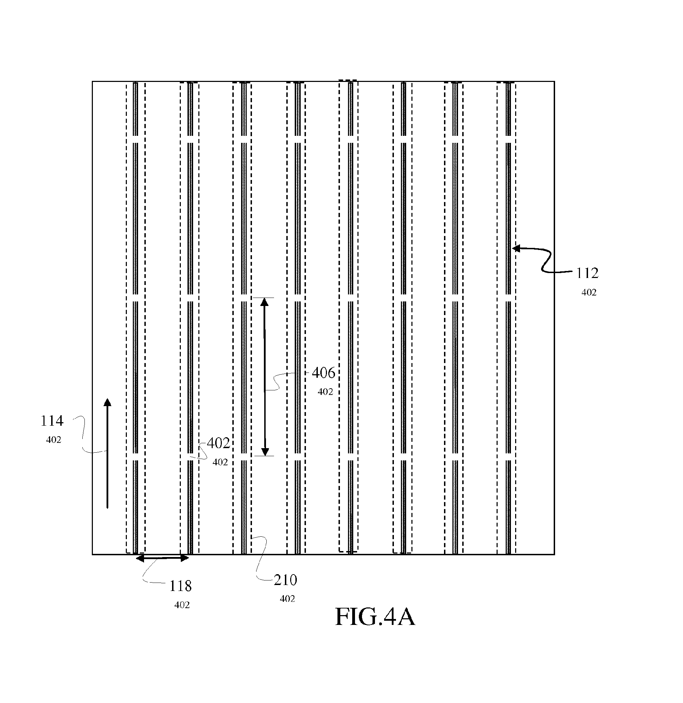

FIG. 4A is a top view of the array of riblets of FIG. 2B with additional features;

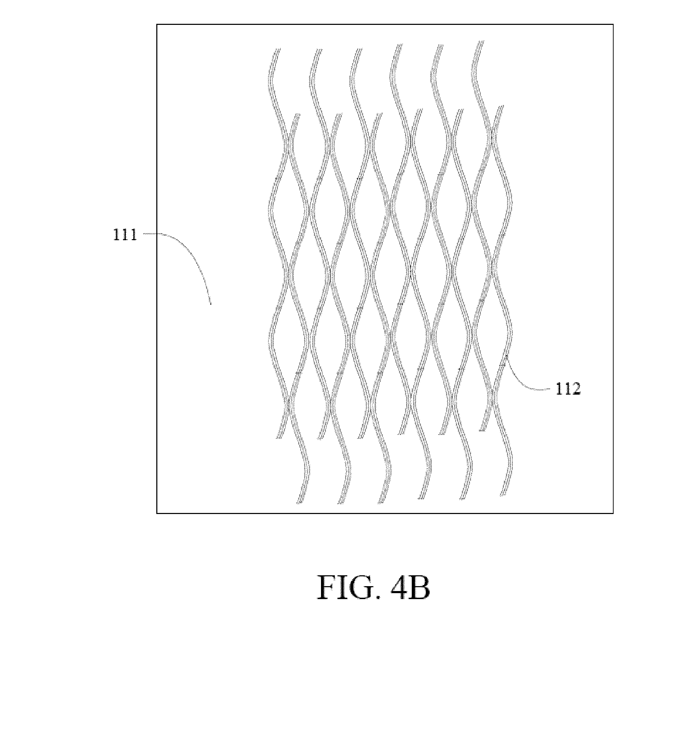

FIG. 4B is a top view of an array of riblets with a predetermined coordinated pattern;

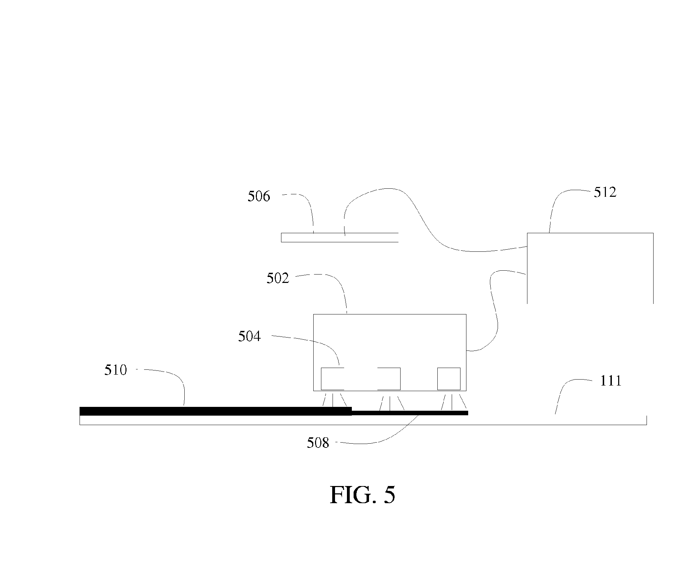

FIG. 5 is a block diagram of a paint print head for application of riblets to an aerodynamic surface;

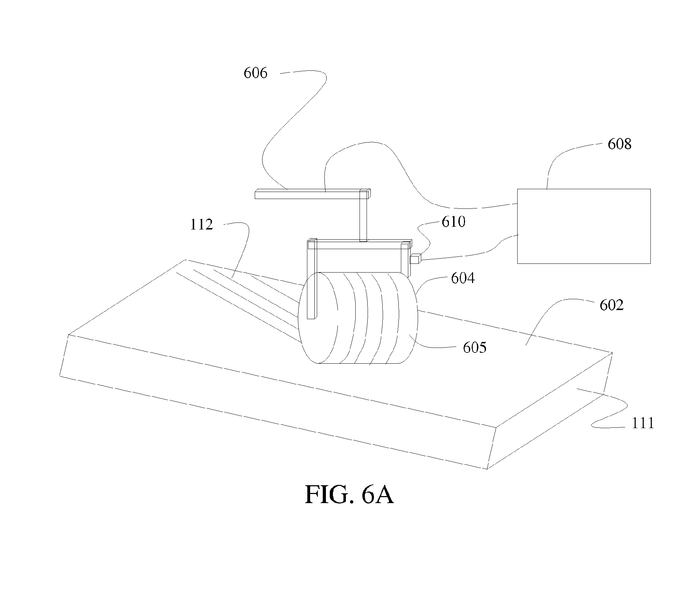

FIG. 6A is a block diagram of an impression roller system for creating riblets in a malleable paint layer;

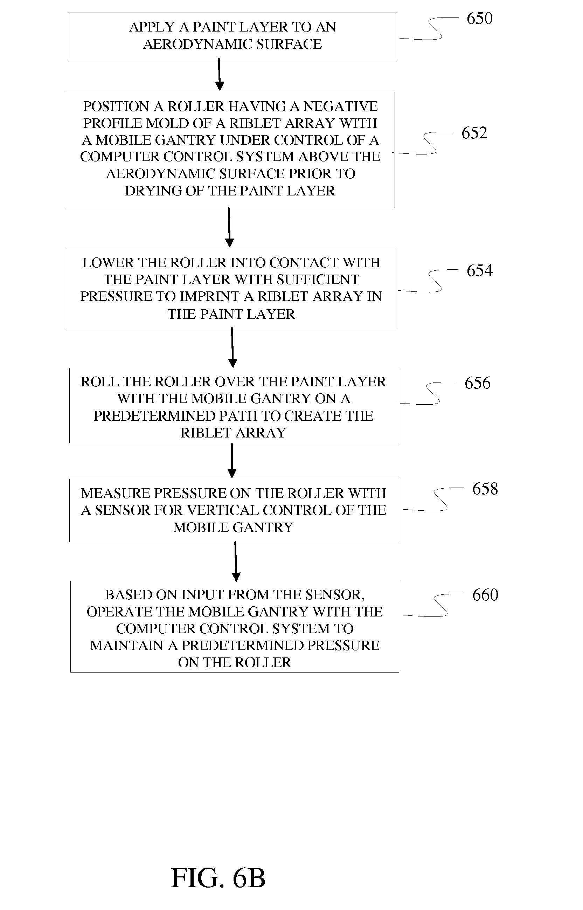

FIG. 6B is a flow diagram of a method for creating riblets in a malleable paint layer with the impression roller system of FIG. 6A;

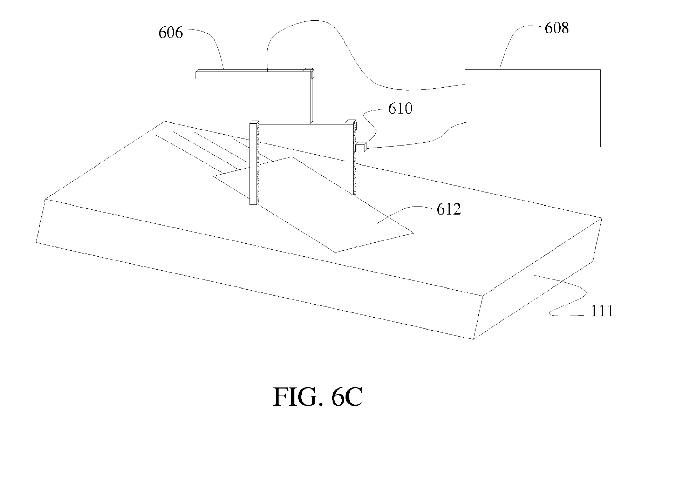

FIG. 6C is a block diagram of an imprint block system for creating riblets in a malleable paint layer;

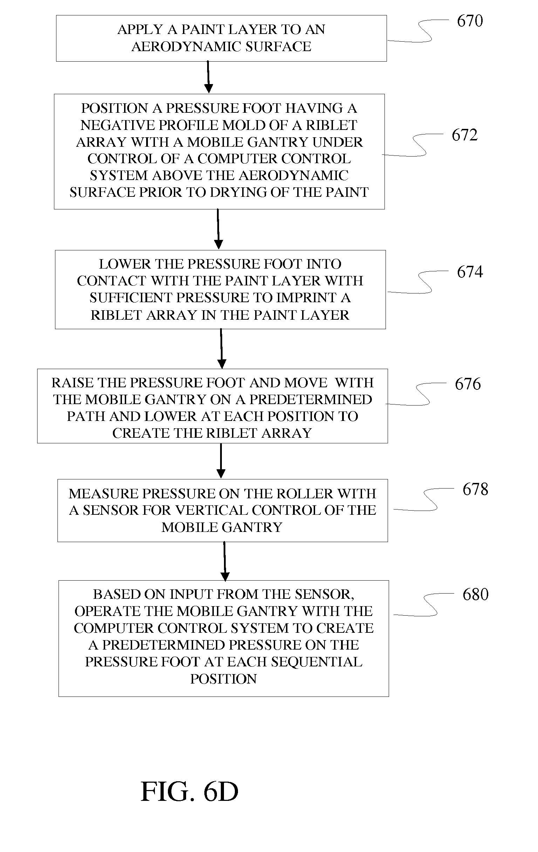

FIG. 6D is a flow diagram of a method for creating riblets in a malleable paint layer with the imprint block system of FIG. 6C;

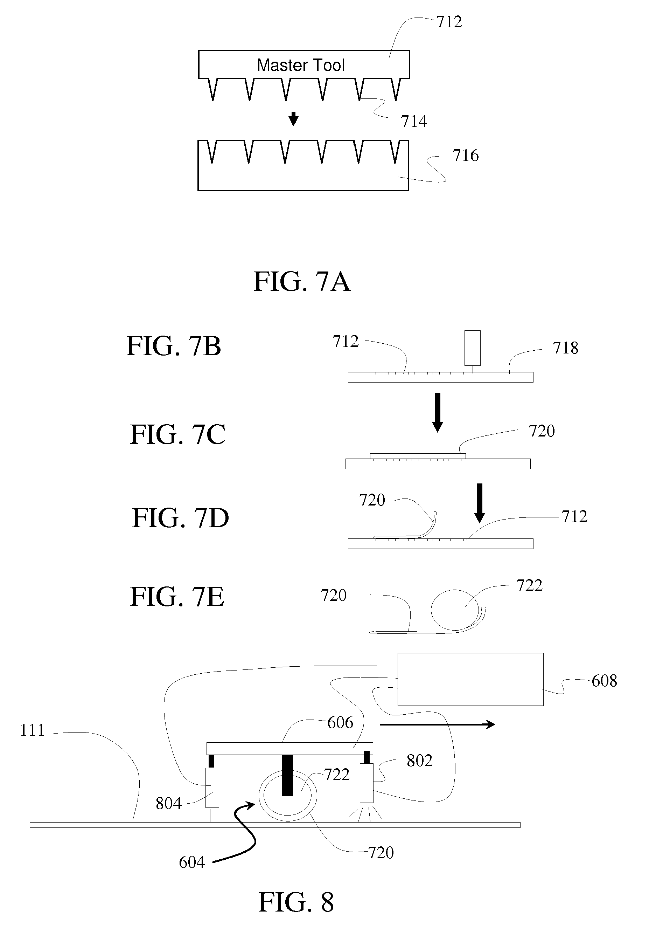

FIG. 7A is a section schematic view of preparation of a master tool for creation of an impression roller or an imprint block for creating riblets in a malleable paint layer;
FIG. 7B-7D provide a flow diagram of an alternative for preparation of a riblet negative for an impression roller or an imprint block for creating riblets in a malleable paint layer;
FIG. 7E shows attachment of the riblet negative to a roller;
FIG. 8 is a system block diagram for a multiple element system for dispensing paint, rolling the malleable paint with an impression roller and hardening the paint with a catalyzing agent;

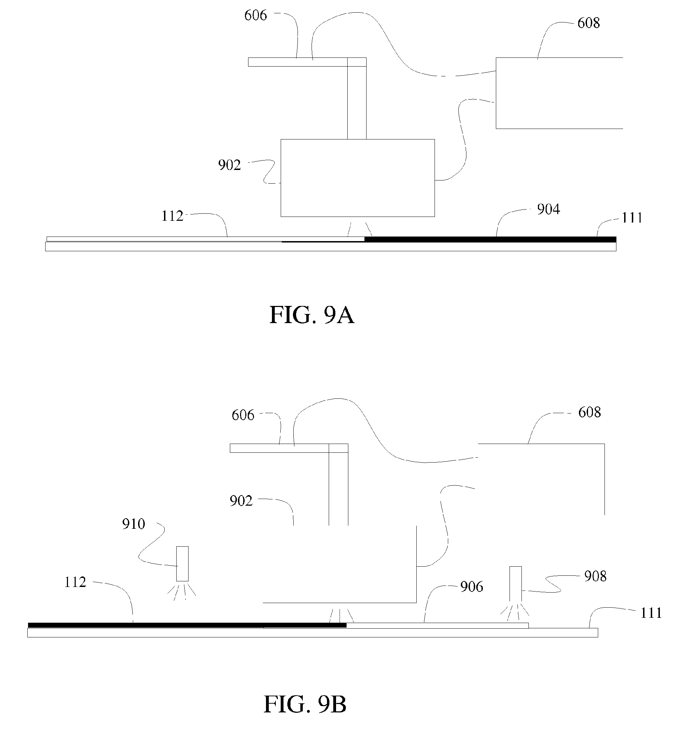

FIG. 9A is a block diagram of a laser system for cutting riblet topology into paint;
FIG. 9B is a block diagram of a catalyzing system for stereo lithographic building of riblet structure;

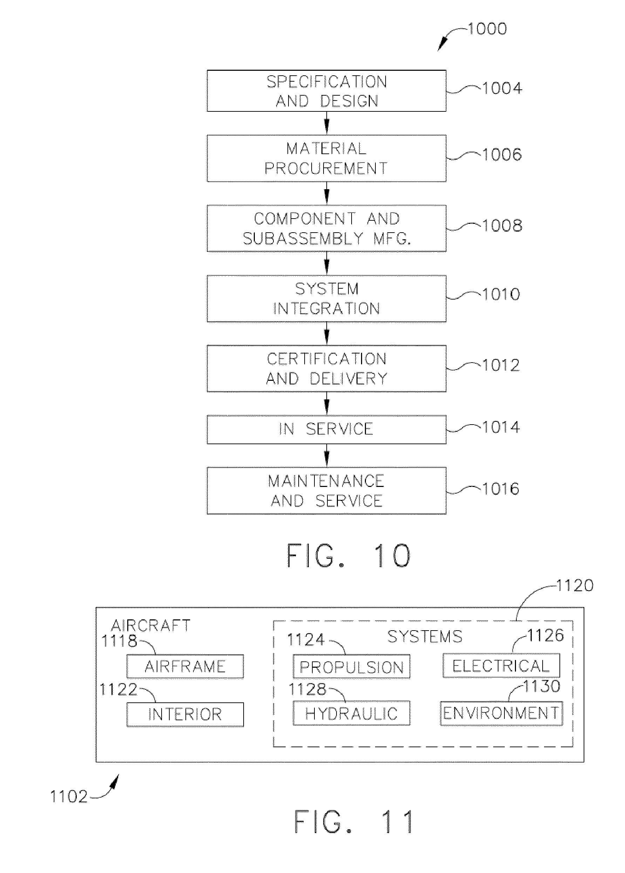

FIG. 10 is a flow diagram describing use of the riblet embodiments disclosed herein in the context of an aircraft manufacturing and service method; and
FIG. 11 is a block diagram representing an aircraft employing the riblets with embodiments as disclosed herein.

### DETAILED DESCRIPTION

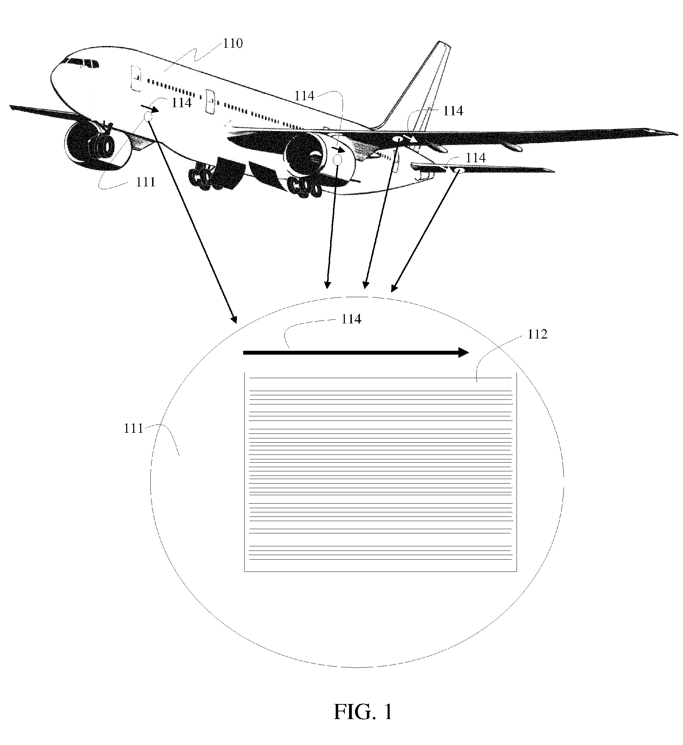

An exemplary embodiment of riblets having a structure as will be described in greater detail subsequently is shown as a portion of an aerodynamic surface for an aircraft is shown in FIG. 1. The aircraft 110 employs a structure with a surface 111, shown enlarged, having multiple substantially parallel riblets 112 arranged parallel to the flow direction as represented by arrow 114. FIG. 2A shows a cross section of immediately adjacent riblets as may be applicable for high speed aerodynamic applications. In a generalized case, as shown in FIG. 2B, the riblets may be spaced laterally on the surface 111. For the exemplary embodiment shown, dimension 116 perpendicular to the surface 111 as shown in FIGs. 2A and 2B and tip-to-tip spacing 118 between the riblets as shown in FIG. 3 are determined by the dynamic pressure, Q, exerted on the surface and may vary from location to location on the vehicle. Larger dimensions for the riblets and/or spacing may be present for hydrodynamic or low speed aerodynamic applications while extremely small dimension may be employed for high speed aerodynamic applications. The riblets 112 shown in FIGs. 2A and 2B are integral to a complete paint layer 208. Alternatively, riblets may be formed from paint strips or stripes 210 separately applied to the aerodynamic surface 111 as shown in FIG. 2B and 4A. Spacing of the riblets may vary depending on the fluid dynamic properties of the air, water or other fluid for which the application of riblets is employed. The aerodynamic surface is typically curved and may be, without limitation, a portion of a wing, an engine nacelle, a control surface, a fuselage or other suitable surface. Therefore flexibility and conformability of the riblets on the surface may be required. To assist in providing necessary flexibility of the riblet structure, the riblets may be discontinuous as shown in FIG. 4A with gaps 402 spaced at longitudinal distances 406 along the length of riblets 112. Separation 404 between paint strips forming riblets in the embodiment of FIG. 2B may be employed to eliminate lateral bending stresses which might deform riblets in the array. While described herein with respect to an aircraft aerodynamic surface the embodiments disclosed herein are equally applicable for drag reduction on surfaces of other aerospace vehicles such as, without limitation, missiles or rockets and other vehicles such as cars, trucks, buses and trains moving in a gaseous fluid, commonly air, or on boats, submarines, hydrofoils, fluid flow conduits or other surfaces exposed to liquid fluid flow. While shown in the drawings previously described as substantially parallel, the riblets may be employed in an array of any coordinated pattern and may diverge, converge or intersect as shown in FIG. 4B.

The embodiments disclosed herein provide multiple structures and apparatus for creating or applying riblets to a surface such as printing heads, which are computer controlled, and can be programmed to apply aircraft markings with high levels of accuracy. Such heads are employed to apply topcoat or clearcoat riblets. In other embodiments riblets may be created by an impression mold element in a malleable paint layer which has not yet dried. Computer controlled rollers encompassing the impression mold element can be passed over the airplane surfaces during painting of the airplane while the paint is still malleable, thereby mechanically embedding the desired topology into the final surface film. Alternatively, a textured surface encompassing the impression mold element is pressed against the paint while the paint is still malleable. Such a surface could be made of flexible material to eliminate a requirement for contour matching if a rigid material were used. In other embodiments, riblets may be formed on or in a paint surface. In one example, computer controlled lasers are used to cut the required topology into the paint. In another embodiment, lasers are used to pass over surfaces that are wetted with a paint or other agent activated by laser light or other catalyzing system for stereo lithographic building of riblet structure. The non-activated material can then be flushed away leaving the consolidated riblet structure in place.

As shown in FIG. 5, a print head 502 having an array of print jets 504 is supported by a controllable gantry 506. The array of print jets may be two dimensional to allow printing of multiple layers 508, 510 of paint along an axis of movement created by the gantry as well as painting a swath lateral to the axis of motion. The print heads 504 are shown in exaggerated size for clarity in the drawings but would be suitably sized for very small scale printing to allow sequential accumulation of multiple print "dots" to create the desired riblet size and shape. A computer control system 512 controls the gantry 506 for motion of the print head and also controls the array of print jets 504 to print the desired riblet profile and length. The two dimensional array of print jets 504 allows simultaneous printing of parallel riblets 112 and may also allow simultaneous printing of paint intermediate the riblets for a complete paint layer.

An alternative to creating paint buildup to produce the riblet shape, riblets may be created in a malleable paint layer. As shown in FIG. 6A, an aerodynamic surface 111 with an applied layer of paint 602 which has not yet hardened and remains in a malleable condition is engaged by a roller 604 suspended from a controlled motion gantry 606. Roller 604 has a molded surface 605 having a negative impression of the desired riblet shape as will be described in greater detail subsequently. The riblet sizing on the roller is exaggerated in the figure for clarity. The gantry 606 is operated for motion along the aerodynamic surface 111 by a computer control system 608 which controls vertical motion of the gantry as well as lateral motion to roll the roller 604 over the paint layer. A sensor 610 on the gantry or roller provides force feedback to the computer control system 608 to allow appropriate pressure to be exerted by the gantry 606 through the roller 604 to form the riblets 112 in the malleable paint layer. Additional sensors for positioning and control of the roller on the aerodynamic surface by the computer control system 608 as well as input to the computer control system from a three dimensional CAD model may be employed as is known in the art.

As shown in FIG. 6B, operation of the embodiment of FIG. 6A involves applying a paint layer to an aerodynamic surface, step 650. A roller having a negative profile mold of a riblet array is positioned with a mobile gantry under control of a computer control system above the aerodynamic surface prior to drying of the paint layer, step 652. The roller is then lowered into contact with the paint layer with sufficient pressure to imprint a riblet array in the paint layer, step 654, and rolled over the paint layer by the mobile gantry on a predetermined path to create the riblet array, step 656. Pressure on the roller is measured by a sensor for vertical control of the mobile gantry, step 658. Based on input from the sensor, the computer control system operates the mobile gantry to maintain a predetermined pressure on the roller, step 660.

As an alternative to a roller, a pressure foot 612 with a negative mold or imprint of the desired riblet profile may be attached to the gantry 606 as shown in FIG. 6C. The gantry 606 would then be sequentially positioned by the computer control system 608 and vertically pressed into the paint layer 602 to create the riblets and employing pressure sensor 610 for control feedback. Pressure foot 612 may be flexible to match the contour of the surface at the location positioned by the gantry.

Operation of the pressure foot is similar to the operation of the roller embodiment previously described. As shown in FIG. 6D, a paint layer is applied to an aerodynamic surface, step 670. A pressure foot having a negative profile mold of a riblet array is positioned with a mobile gantry under control of a computer control system above the aerodynamic surface prior to drying of the paint layer, step 672. The pressure foot is then lowered into contact with the paint layer with sufficient pressure to imprint a riblet array in the paint layer, step 674. The pressure foot is then raised and moved by the mobile gantry to sequential positions on a predetermined path and lowered at each position to create the riblet array, step 676. Pressure on the pressure foot is measured by a sensor for vertical control of the mobile gantry, step 678. Based on input from the sensor, the computer control system operates the mobile gantry to create a predetermined pressure on the roller at each sequential position, step 680.

Shown in FIGs. 7A-7E, is an exemplary tool fabrication technique for implementing the embodiments described with respect to FIGs. 6A and 6C. FIG. 7A shows a master tool 712 which provides the necessary shape or profile 714 for the riblets. A moldable material is then applied to the master tool to create a negative mold 716 which may then be used to actually form the riblets in the malleable paint layer. As shown in FIG. 7B, master tool 712 may be created using, as an example, diamond machining of a copper form 718. An acrylate film 720, or similar material, is cured on the master tool 712, as shown in FIG. 7C. As shown in FIG. 7D, the film 720 may then be stripped from the master tool 712 and applied to a roller core722 to create the roller 604 as shown in FIG. 6A or applied to a pressure foot 612 as shown in FIG. 6C.

An integrated system may be employed as shown in FIG. 8 wherein a gantry 606 under control of a computer control system 608 as previously described, carries a paint application unit 802 which applies a paint layer under control of the computer control system 608. A roller 604 mounted on the gantry trailing the paint application unit 802 imprints the riblet profile into the paint layer as previously described with respect to FIG. 6A and 6B. The paint may employ a hardening or activating agent formulation and an activator 804 is mounted to the gantry 606 following the roller 604 to harden the formed paint layer including the riblets. UV or laser activation may be employed or, alternatively, a chemical hardener may be dispensed by the activator 804.

In an embodiment shown in FIG. 9A, a computer controlled laser 902 mounted to the gantry 606 is transitioned over the aerodynamic surface 111 with a paint layer 904 previously applied to the surface. The laser 902 is activated by the computer control system 608 to cut the required topology for the riblets into the paint layer 904.

In another embodiment shown in FIG. 9B, laser 902 under control computer control system 608 is passed by gantry 606 over the aerodynamic surface that has been wetted with an agent 906 by an applicator 908, wherein the agent is activated by laser light for stero lithographic building of structure for the riblets 112. The non-activated material is then flushed away by a spray nozzle 910 leaving the riblets 112 in place on the surface. The applicator 908 and spray nozzle 910 may be attached to the gantry 606 to lead and follow the laser 902 similar to the integrated system as described with respect to FIG. 8. An alternative activating or other catalyzing system such as UV may be employed instead of the laser.

The embodiments described herein allow rapid repair of damaged riblets by stripping of the paint layer in the damaged area and reapplication of paint and forming of riblets by any of the methods described.

Referring more particularly to FIGs. 10 and 11, embodiments of the riblets disclosed herein and the methods for their fabrication may be described in the context of an aircraft manufacturing and service method 1000 as shown in FIG. 10 and an aircraft 1102 as shown in FIG. 11. During pre-production, exemplary method 1000 may include specification and design 1004 of the aircraft, which may include the riblets, and material procurement 1006. During production, component and subassembly manufacturing 1008 and system integration 1010 of the aircraft takes place. The rib let manufacturing processes as described herein may be accomplished as a portion of the production, component and subassembly manufacturing step 1008 and/or as a portion of the system integration 1010. Thereafter, the aircraft may go through certification and delivery 1012 in order to be placed in service 1014. While in service by a customer, the aircraft 1002 is scheduled for routine maintenance and service 1016 (which may also include modification, reconfiguration, refurbishment, and so on). The riblets embodied in paint as described herein may also be fabricated and applied as a portion of routine maintenance and service.

Each of the processes of method 1000 may be performed or carried out by a system integrator, a third party, and/or an operator (e.g., a customer). For the purposes of this description, a system integrator may include without limitation any number of aircraft manufacturers and major-system subcontractors; a third party may include without limitation any number of venders, subcontractors, and suppliers; and an operator may be an airline, leasing company, military entity, service organization, and so on.

As shown in FIG. 11, the aircraft 1102 produced by exemplary method 1000 may include an airframe 1118 having a surface 111, as described with respect to FIG. 1, and a plurality of systems 1120 and an interior 1122. Examples of high-level systems 1120 include one or more of a propulsion systems 1124, an electrical and avionics system 1126, a hydraulic system 1128, and an environmental system 1130. Any number of other systems may be included. The paint riblets supported by the embodiments disclosed herein may be a portion of the airframe, notably the finishing of skin and exterior surfaces. Although an aerospace example is shown, the principles disclosed by the embodiments herein may be applied to other industries, such as the automotive industry and the marine/ship industry.

Apparatus and methods embodied herein may be employed during any one or more of the stages of the production and service method 1000. For example, components or subassemblies corresponding to production process 1008 may be fabricated or manufactured in a manner similar to components or subassemblies produced while the aircraft 1102 is in service. Also, one or more apparatus embodiments, method embodiments, or a combination thereof may be utilized during the production stages 1008 and 1010, for example, by substantially expediting assembly of or reducing the cost of an aircraft 1102. Similarly, one or more of apparatus embodiments, method embodiments, or a combination thereof may be utilized while the aircraft 1102 is in service, for example and without limitation, to maintenance and service 1016.

Having now described various embodiments in detail as required by the patent statutes, those skilled in the art will recognize modifications and substitutions to the specific embodiments disclosed herein. Such modifications are within the scope and intent of the present disclosure as defined in the following claims.

## Claims

1. A riblet impression system comprising:
an impression mold element;
a gantry supporting the impression mold element and adapted for positioning and motion over an aerodynamic surface; and,
a computer control system connected to and controlling the gantry on a predetermined path over the aerodynamic surface and further controlling the gantry vertically with respect to the aerodynamic surface to sequentially impress the impression mold element in a malleable paint layer on the aerodynamic surface forming a riblet profile along the predetermined path.

2. The riblet impression system as defined in claim 1 wherein the impression mold element comprises a roller.

3. The riblet impression system as defined in claim 1 wherein the impression mold element comprises a pressure foot.

4. The riblet impression system as defined in any of claims 1 to 3 further comprising a pressure sensor associated with the impression mold element and connected to the computer control system, said computer control system vertically controlling the gantry responsive to the pressure sensor.

5. The riblet impression system as defined in any of claims 1 to 4 further comprising a paint application unit carried by the gantry, said impression mold element trailing the paint application unit and sequentially impressing the impression mold element in a malleable paint layer applied by the paint application unit on the aerodynamic surface.

6. The riblet impression system as defined in claim 5 further comprising an activator mounted to the gantry following the roller, said activator hardening the formed paint layer including the riblets.

7. The riblet impression system as defined in claim 2 wherein the roller further comprises an acrylate film cured on a master tool having a profile of the riblets said film stripped from the master tool and applied to a roller core.

8. The riblet impression system as defined in claim 2 wherein the pressure foot further comprises an acrylate film cured on a master tool having a profile of the riblets said film stripped from the master tool and applied to the pressure foot.

9. A method for forming riblets on an aerodynamic surface comprising:
applying a paint layer to an aerodynamic surface;
positioning an impression mold element having a negative profile mold of a riblet array prior to drying of the paint layer;
lowering the impression mold element is into contact with the paint layer with sufficient pressure to imprint a riblet array in the paint layer;
sequentially transitioning the impression mold element over the paint layer on a predetermined path to create a riblet array.

10. The method as defined in claim 9 further comprising:
measuring pressure on the impression mold element to maintain a predetermined pressure.

11. The method as defined in claim 9 or 10 wherein positioning an impression mold element comprises positioning a roller and sequentially transitioning comprises rolling the roller over the paint layer on a predetermined path to create a riblet array.

12. The method as defined in claim 9 or 10 wherein positioning an impression mold element comprises positioning a pressure foot and sequentially transitioning comprises raising and moving the pressure foot to sequential positions on a predetermined path and lowered at each position to create the riblet array.

13. The method as defined in any of claims 9 to 12further comprising machining a master tool with a riblet array profile; applying an acrylate film to the master tool creating a negative mold; stripping the acrylate film from the master tool; and, applying the acrylate film to an impression mold element.
